# FASCICULE DE BREVET EUROPEEN

(11) **EP 4 275 954 B1**
(45) Date de publication et mention de la délivrance du brevet: **13.11.2024**
(21) Numéro de dépôt: 23168627.0
(22) Date de dépôt: 19.04.2023
(51) Int. Cl.: B60P 3/36

(54) **VEHICULE DE LOISIRS COMPRENANT UNE SOUTE A BAGAGES REGLABLE EN VOLUME AU MOYEN D'UN BLOC DE DRESSING**
FREIZEITFAHRZEUG MIT EINEM GEPÄCKRAUM, DESSEN VOLUMEN MITTELS EINES DRESSINGBLOCKS VERSTELLBAR IST
RECREATIONAL VEHICLE WITH A LUGGAGE COMPARTMENT ADJUSTABLE IN VOLUME BY MEANS OF A DRESSING BLOCK

(30) Priorité: 11.05.2022 FR 2204470
(43) Date de publication de la demande: 15.11.2023
(73) Titulaire: Trigano VDL, 75019 Paris (FR)
(72) Inventeur: DELAYE, Simon, 26600 Gervans (FR)
(74) Mandataire: Novagraaf Technologies

(56) Documents cités:
- EP-A1- 3 517 361
- EP-A2- 1 123 837
- GB-A- 2 103 551
- IT-A1- PR20 110 014

## Description

### Domaine technique de l'invention

L'invention concerne le domaine des véhicules de loisirs, notamment des camping-cars. Plus précisément, l'invention concerne un véhicule de loisirs comprenant une soute à bagages réglable en volume au moyen d'un bloc fonctionnel mobile réglable en hauteur permettant notamment d'aménager une zone dite de « dressing ».

### Arrière-plan technique

Il est connu de munir des véhicules de loisirs, notamment les camping-cars, d'une soute à bagages réglable en volume, notamment d'une soute à bagages agencée à l'extrémité arrière du véhicule.

Une telle soute à bagages permet de faire varier la capacité de la soute à bagages en fonction des besoins des utilisateurs du véhicule de loisirs.

Les utilisateurs peuvent en effet augmenter le volume et la capacité de la soute à bagages, lorsqu'ils ont besoin de transporter des bagages volumineux, ou bien même un vélo ou encore une motocyclette.

Ils peuvent diminuer le volume et la capacité de la soute à bagages, lorsqu'ils ont à transporter des bagages moins volumineux.

Le volume disponible de la soute à bagages, et donc sa capacité de chargement, est déterminé par la hauteur disponible à l'intérieur de la soute à bagages.

L'intérieur de la soute à bagages en vue de son chargement est généralement accessible par une ou plusieurs portes (latérale(s) et/ou transversale arrière) prévue(s) à cette effet.

Le document EP-3 181 399-A2 décrit un exemple de véhicule de loisirs comprenant une soute à bagages réglable en volume.

Ce véhicule de loisirs comprend un espace intérieur arrière délimité par une paroi verticale arrière. L'espace intérieur arrière comprend la soute à bagages et une zone d'habitacle située au-dessus de la soute à bagages, la soute à bagages et la zone d'habitacle étant séparées l'une de l'autre par un lit qui est fixe par rapport à la paroi arrière du véhicule de loisirs.

La soute à bagages comprend en outre un plancher réglable en hauteur par rapport à la paroi arrière du véhicule de loisirs, de sorte à faire varier le volume disponible dans la soute à bagages. Il est ainsi possible d'augmenter ou de diminuer la capacité de la soute à bagages en abaissant ou en élevant le plancher de la soute à bagages.

Autrement dit, cette solution impose d'abaisser le plancher de la soute à bagages en direction de la route pour augmenter la capacité de la soute à bagages, ce qui peut poser problème pendant le roulage du véhicule de loisirs, notamment pour le franchissement d'obstacles, tels qu'un dos d'âne.

Le document DE-202006005639-U1 décrit un autre exemple d'un véhicule de loisirs comprenant une soute à bagages réglable en volume.

Dans ce véhicule, la soute à bagages de l'espace intérieur arrière est séparée de la zone d'habitacle par un lit horizontal réglable en hauteur par rapport à la paroi arrière du véhicule de loisirs.

Cette solution impose nécessairement que la zone d'habitacle située au-dessus de la soute à bagages soit une zone de couchage pour des utilisateurs du véhicule de loisirs. Cette solution n'offre donc que peu de possibilités pour aménager l'espace intérieur arrière du véhicule de loisirs.

Le document EP-3517361-A1 propose un espace intérieur comprenant une soute à bagages et une zone d'habitacle agencée au-dessus de la soute à bagages, la soute à bagages et la zone d'habitacle étant séparées verticalement l'une de l'autre par un coffre de rangement, et comprenant des moyens d'entraînement du coffre de rangement en translation verticale entre une position extrême haute et une position extrême basse, de sorte à faire varier un volume disponible à l'intérieur de la soute à bagages.

Le document IT PR20 110 014 A1 décrit un exemple d'un véhicule de loisirs selon le préambule de la revendication 1.

La présente invention vise à proposer une conception d'un véhicule de loisirs comprenant un espace intérieur arrière pourvu d'une soute à bagages et d'une zone d'habitacle séparés verticalement l'une de l'autre offrant une nouvelle possibilité d'aménagement de l'espace intérieur arrière du véhicule de loisirs.

### Résumé de l'invention

L'invention propose un véhicule de loisirs s'étendant d'arrière en avant suivant une direction longitudinale et de bas en haut suivant une direction verticale, comprenant :
- une paroi transversale arrière verticale,
- et un espace intérieur arrière :
   -- qui est délimité longitudinalement vers l'arrière par la paroi transversale arrière, vers l'avant par une cloison intérieure parallèle à la paroi transversale arrière et vers la bas par une paroi horizontale inférieure ;
   -- et qui comprend une soute à bagages inférieure et une zone d'habitacle supérieure agencée au-dessus de la soute à bagages qui sont séparées verticalement l'une de l'autre par un bloc fonctionnel mobile dont une zone est accessible depuis l'intérieur du véhicule, à travers une ouverture de la cloison intérieure, et qui est entraîné en translation verticale, par des moyens d'entraînement entre :
      * une position extrême haute dans laquelle la hauteur disponible de la soute à bagages est maximale ;
      * et une position extrême basse dans laquelle dans laquelle un plancher du bloc fonctionnel mobile est adjacent à la paroi horizontale inférieure de l'espace intérieur arrière, grâce à quoi un utilisateur peut accéder à l'intérieur du bloc fonctionnel mobile pour pénétrer à l'intérieur de la zone d'habitacle supérieure,
caractérisé en ce que le bloc fonctionnel mobile comporte une paroi supérieure horizontale qui, dans ladite zone principale, comporte une découpe permettant à un utilisateur de stationner debout à l'intérieur de la zone d'habitacle supérieure sur le plancher du bloc fonctionnel mobile .

Grâce à un tel aménagement, en position extrême basse du bloc fonctionnel mobile, un utilisateur peut se situer à l'intérieur de ladite zone d'habitacle qui peut par exemple être aménagée en un dressing, et notamment s'y tenir debout.

Selon d'autres caractéristiques de l'invention :
- le bloc fonctionnel mobile comporte une zone principale qui est agencée transversalement en vis-à-vis de ladite ouverture de la cloison intérieure et dans laquelle, en position extrême basse, un utilisateur peut stationner à l'intérieur de la zone d'habitacle supérieure, sur le plancher du bloc fonctionnel mobile ;
- le bloc fonctionnel mobile comporte au moins une zone latérale de rangement qui est adjacente à ladite zone principale et qui est accessible depuis la zone principale ;
- le bloc fonctionnel mobile comporte une paroi verticale transversale avant qui, dans ladite zone principale , comporte une découpe permettant à un utilisateur de pénétrer à l'intérieur de la zone d'habitacle supérieure ;
- lesdits moyens d'entraînement sont conçus pour entraîner le bloc fonctionnel mobile en translation verticale de manière réglable en hauteur entre ladite position extrême haute et ladite position extrême basse, notamment dans toute position intermédiaire entre ces deux positions extrêmes
- le bloc fonctionnel mobile comporte deux parois latérales verticales opposées et une paroi verticale transversale arrière de fond ;
- le véhicule comporte une porte d'accès à ladite ouverture de la cloison intérieure, notamment une porte verticale coulissante transversalement et adjacente à ladite cloison intérieure ;
- le véhicule comporte un store vertical déroulant qui est lié en translation verticale avec le bloc fonctionnel mobile et qui obture une portion inférieure de ladite ouverture de la cloison intérieure lorsque le bloc fonctionnel mobile est dans une position décalée vers le haut par rapport à sa position extrême basse ;
- l'espace intérieur arrière est équipé d'un miroir agencé sur la face intérieure de ladite paroi transversale arrière verticale en regard de ladite ouverture et/ou d'une barre transversale de penderie agencée au-dessus de ladite zone accessible du bloc fonctionnel mobile ;
- l'espace intérieur arrière comprend des moyens de guidage en translation verticale du bloc fonctionnel mobile entre ses positions extrêmes haute et basse ;
- le véhicule comporte en outre un espace intérieur de vie séparé de l'espace intérieur arrière par ladite cloison intérieure.

### Brève descriptions des figures

D'autres caractéristiques et avantages de l'invention apparaitront au cours de la lecture de la description détaillée qui va suivre pour la compréhension de laquelle on se reportera aux dessins annexés dans lesquels :
[Fig.1] - la figure 1 est une vue schématique en perspective de trois-quarts arrière droit d'un véhicule de loisirs dont la partie arrière est aménagée selon un exemple de réalisation de l'invention ;

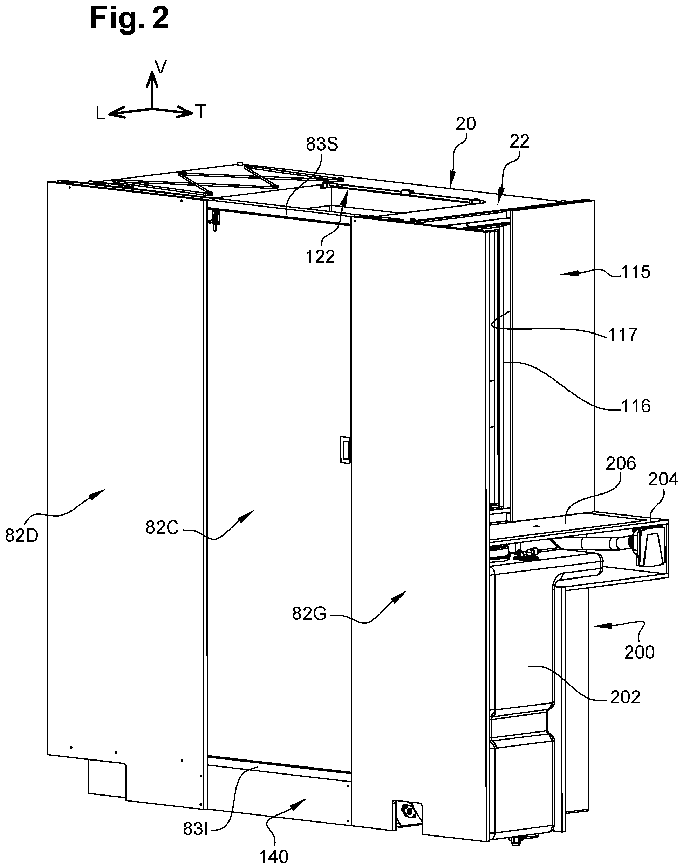

[Fig.2] - la figure 2 est une vue en perspective de trois-quarts avant qui représente l'aménagement selon l'invention de l'espace intérieur arrière du véhicule de loisirs de la figure 1, et sur laquelle le bloc fonctionnel mobile occupe sa position extrême haute et la porte coulissante d'accès à l'intérieur de la zone centrale du bloc fonctionnel mobile est fermée ;
[Fig.3] - la figure 3 est une vue analogue à celle de la figure 2 sur laquelle la porte coulissante d'accès est ouverte ;
[Fig.4] - la figure 4 est une vue analogue à celle de la figure 3 sur laquelle le bloc fonctionnel mobile occupe sa position extrême basse ;
[Fig.5] - la figure 5 est une vue de derrière de l'ensemble représenté à la figure 1;
[Fig.6] - la figure 6 est une demi-vue en perspective et en coupe par le plan longitudinal et vertical médian 6-6 de l'ensemble représenté à la figure 3 ;
[Fig.7] - la figure 7 est une demi-vue partielle en perspective et en coupe analogue à celle de la figure 6 sur laquelle le bloc fonctionnel mobile occupe sa position extrême basse ; [Fig.8] - la figure 8 est une vue en bout de l'ensemble représenté à la figure 4 en coupe par le plan vertical longitudinal médian ;
[Fig.9] - la figure 9 est une vue de dessus de l'ensemble représenté à la figure 3 ;
[Fig.10] - la figure 10 est une vue en perspective du bloc fonctionnel mobile selon l'invention ;
[Fig.11] - la figure 11 est une vue en perspective selon un autre angle de vue du bloc fonctionnel mobile selon représenté à la figure 10.

### Description détaillée de l'invention

### Exemple de réalisation

Dans la description qui va suivre, des éléments identiques, similaires ou analogues seront désignés par les mêmes chiffres de référence.

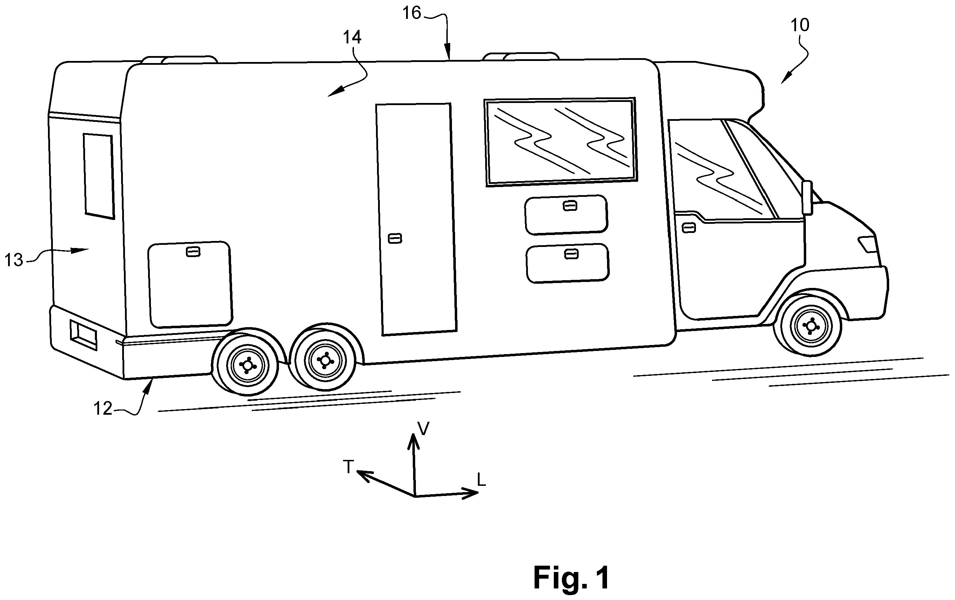

La figure 1 représente un véhicule de loisirs 10 selon un exemple de réalisation de l'invention.

Le véhicule de loisirs 10 est par exemple un camping-car, comme illustré à la figure 1. En variante, le véhicule de loisirs 10 peut être une caravane.

Le véhicule de loisirs 10 s'étend d'arrière en avant suivant une direction longitudinale L, de droite à gauche suivant une direction transversale T et de bas en haut suivant une direction verticale V.

Dans la suite de la description, les termes « longitudinal », « transversal », « vertical » et « horizontal » font respectivement référence aux orientations longitudinale L, transversale T et verticale V du véhicule de loisirs 10.

Le véhicule de loisirs 10 comprend par exemple un plancher avant horizontal, un plancher arrière horizontal 12, une paroi transversale arrière 13 s'étendant verticalement depuis le plancher arrière 12, et deux parois latérales longitudinales gauche 15 et droite 14, s'étendant globalement verticalement depuis les planchers avant 11 et arrière 12, de part et d'autre de la paroi transversale arrière 13 (Figures 1 , 8 et 9 ).

Le véhicule de loisirs 10 comprend encore ici un plafond 16 ou pavillon opposé aux planchers avant 11 et arrière 12 et qui s'étend horizontalement au-dessus de la paroi transversale arrière 13 et des parois latérales 14, 15.

Les planchers avant 11 et arrière 12, la paroi transversale arrière 13, les parois longitudinales 14, 15 et le plafond 16 définissent ensemble un espace intérieur du véhicule de loisirs 10.

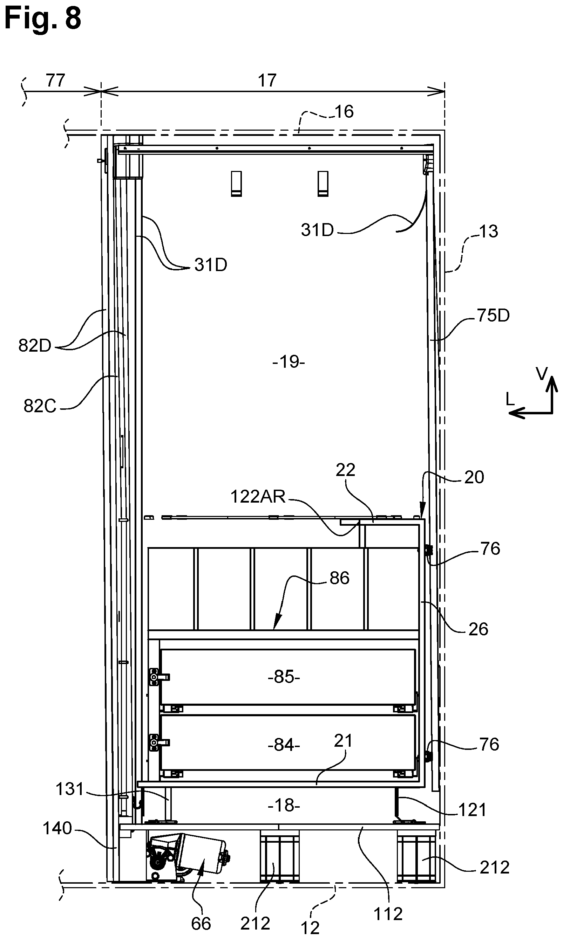

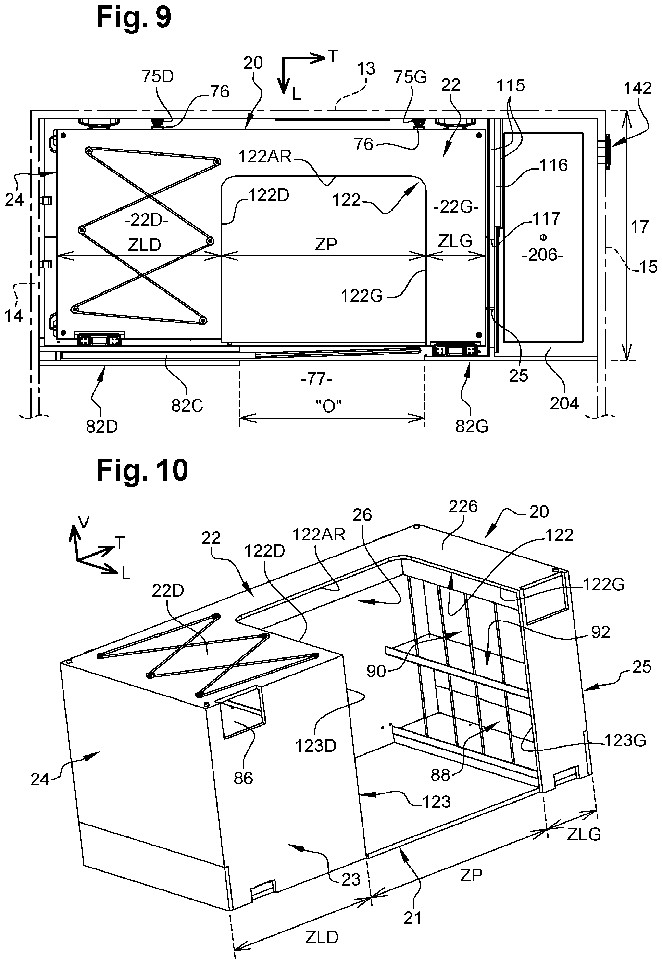

A sa partie d'extrémité arrière, le véhicule de loisirs 10 comprend un espace intérieur arrière 17 qui est délimité longitudinalement vers l'arrière par la paroi transversale arrière 13 et vers l'avant par une cloison transversale intérieure de séparation, ici en trois parties 82D, 82C et 82G qui est parallèle à la paroi transversale arrière 13 (Figures 8 et 9).

La cloison transversale intérieure de séparation comporte une partie de droite 82G qui est double et qui délimite un logement dans lequel la partie centrale 82C peut-être reçue.

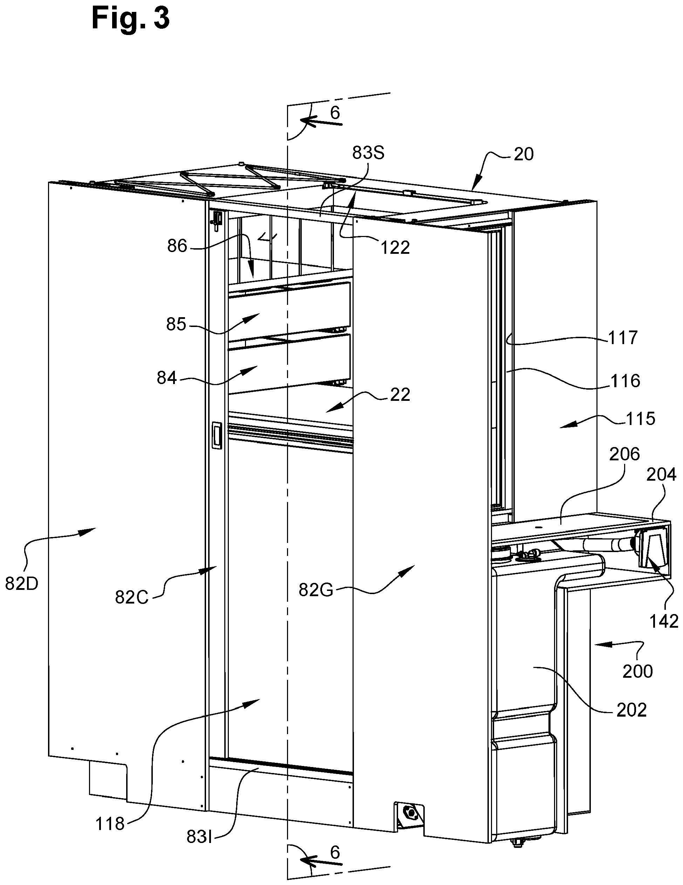

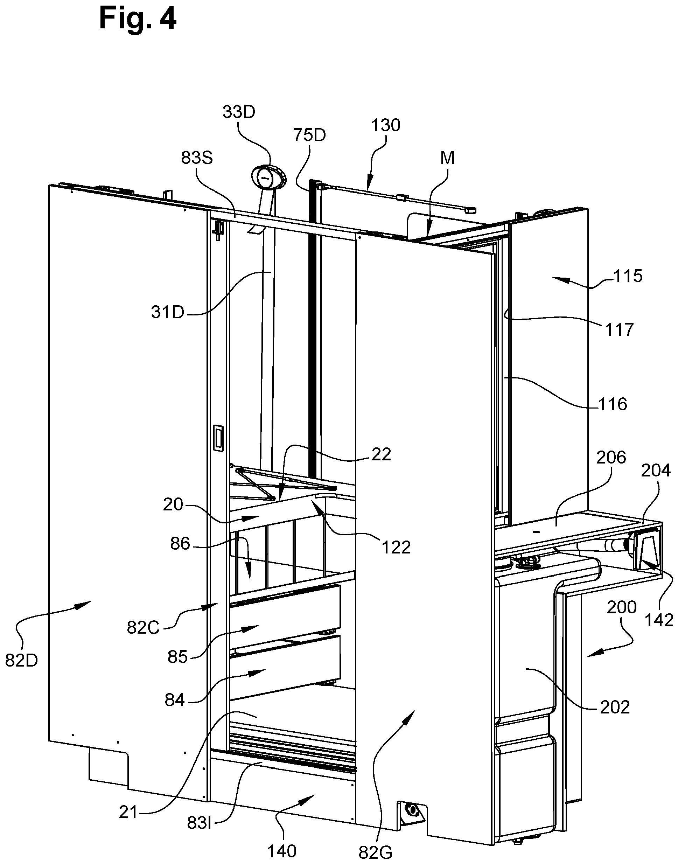

La partie centrale 82C de la cloison intérieure de séparation est une porte coulissante qui est montée mobile entre sa position transversale extrême fermée (Figure 1) et sa position extrême ouverte (Figures 3 et 4) dans laquelle elle est escamotée entre les deux panneaux parallèles de la partie de droite 82D.

La porte centrale 82C est guidée en coulissement par deux rails horizontaux et transversaux inférieur 83I et supérieur 83S.

La partie de gauche 82D de la cloison intérieure de séparation est un panneau fixe.

Le véhicule de loisirs 10 peut encore comprendre un espace intérieur de vie 77 situé devant l'espace intérieur arrière 17 (Figures 8 et 9).

L'espace intérieur de vie 77 peut comprendre différents aménagements (Non représentés) adaptés à la vie au quotidien dans l'espace intérieur de vie 77 tels que par exemple une ou plusieurs dinettes (On entend par « dinette », un ensemble d'une table et d'une ou plusieurs banquettes), un bloc sanitaire, un équipement de cuisine, des moyens de couchage, etc. L'espace intérieur de vie 77 est séparé de l'espace intérieur arrière 17 par la cloison de séparation 82D, 82C, 82G.

L'espace intérieur arrière 17 comprend une soute à bagages inférieure 18 et une zone d'habitacle supérieure 19 agencée au-dessus de la soute à bagages 18.

La soute à bagages 18 et la zone d'habitacle 19 s'étendent ici transversalement dans l'espace intérieur 17 entre la paroi longitudinale de droite 14 et une cloison longitudinale intérieure 115 parallèle à la paroi longitudinale gauche 15 qui s'étend longitudinalement entre la paroi transversale arrière 13 et la cloison de séparation 82D, 82C, 82G.

Comme on peut notamment le voir aux figures 3 à 6 et 9, dans sa moitié supérieure, la cloison longitudinale intérieure 115 est pleine à sa partie arrière, et comporte une ouverture rectangulaire 117 à sa partie avant.

La partie arrière pleine de la cloison longitudinale 115 est double avec deux panneaux parallèles qui délimite entre eux un panneau coulissant 116 qui constitue une porte coulissante de fermeture de l'ouverture 116.

Aux figures, la porte coulissante 116 est représentée en position ouverte.

Lorsque le bloc fonctionnel mobile 20 est dans sa position extrême basse et que la porte coulissante 116 est ouverte, depuis l'intérieur de la zone centrale de l'espace intérieur 17, il est possible d'accéder à la zone latérale située transversalement située entre la cloison longitudinale intérieure 115 et la paroi longitudinale gauche 15.

Dans cette zone, on a représenté aux figures différents aménagements et composants 200 comportant notamment un réservoir d'eau 202 et ses moyens de raccordement.

Une bouche 142 de remplissage du réservoir d'eau est illustrée aux figures 4, 5 et 9.

Ces composants sont recouverts par une plaque supérieure 204 d'habillage qui comporte une trappe de visite 206 qui est accessible à travers l'ouverture 117.

En considérant la figure 9, la partie de l'espace intérieur 17 située à droite de la cloison longitudinale intérieure 115 comporte des équipements fixes qui seront décrits par la suite. La soute à bagages 18 et la zone d'habitacle 19 sont séparées l'une de l'autre, suivant la direction verticale V, par un bloc fonctionnel mobile 20 selon l'invention.

Seul le bloc fonctionnel mobile sépare verticalement la soute à bagages 18 de la zone d'habitacle 19.

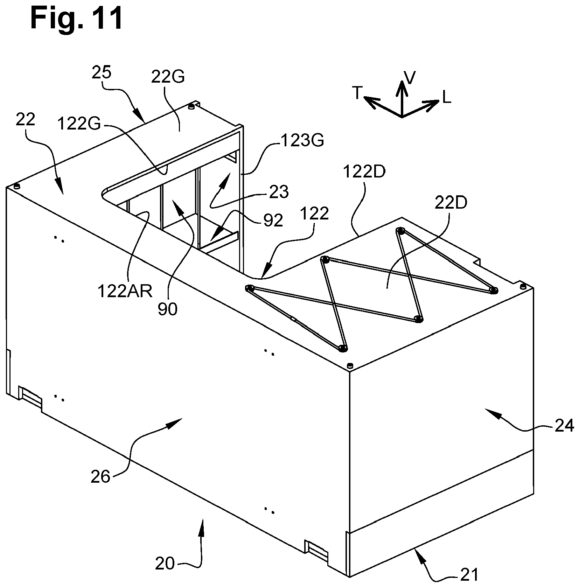

Le bloc fonctionnel mobile 20 présente par exemple une forme globalement parallélépipédique rectangle (Voir notamment figures 8 à 11).

Le bloc fonctionnel mobile 20 comprend une paroi inférieure horizontale 21 constituant le plancher du bloc fonctionnel mobile 20 et une paroi supérieure horizontale 22 qui sont reliées l'une à l'autre par une paroi verticale transversale avant 23, et par deux parois latérales longitudinales et verticales opposées gauche 24, et droite 25.

Le bloc fonctionnel mobile 20 comporte encore une paroi verticale transversale arrière de fond 26.

Le plancher 21, la paroi supérieure horizontale 22, la paroi transversale avant 23, les deux parois latérales opposées 24 et 25 et la paroi arrière 26 du bloc fonctionnel mobile 20 définissent ensemble un volume intérieur du bloc fonctionnel mobile qui comporte plusieurs zones fonctionnelles distinctes.

Le bloc fonctionnel 20 comporte notamment une zone principale ZP qui, à titre d'exemple non limitatif, est ici agencée entre deux zones latérales opposées gauche ZLG et droite ZLD. La zone principale ZP est une zone dite ouverte ou dégagée.

A cet effet, la paroi transversale avant 23 comporte, sur toute sa hauteur, une découpe rectangulaire 123 qui est délimitée par deux bords verticaux opposés gauche 123G et droit 123D.

La paroi supérieure horizontale 22 comporte une découpe rectangulaire 122 qui s'étend longitudinalement depuis la face transversale avant 23 et qui est délimitée par deux bords horizontaux opposés gauche 122G et droit 122D, et par un bord transversal arrière 122AR. Les deux découpes verticale 123 et horizontale 122 sont dans le prolongement l'une de l'autre.

Ainsi, comme on peut le voir notamment aux figures 9 à 11, un utilisateur peut se tenir à l'intérieur de la zone principale ZP en y pénétrant longitudinalement - d'avant en arrière - à travers les découpes 123 et 122.

A titre non limitatif, la hauteur du bloc fonctionnel mobile 20, séparant son plancher 21 de sa paroi supérieure 22, est ici inférieure à la moitié de la hauteur maximale disponible dans la zone principale ZP au-dessus du plancher 21 du bloc fonctionnel mobile 20 lorsque ce dernier est en position extrême basse.

A titre non limitatif, chacune des deux zones latérales gauche ZLG et droite ZLD est aménagée en une zone de rangement qui est accessible depuis la zone principale ZP. Chacune des deux zones latérales gauche ZLG et droite ZLD comporte une face latérale d'accès qui est orientée transversalement vers l'intérieur en direction de la zone principale ZP.

Chacune des deux zones latérales gauche ZLG et droite ZLD est fermée à sa partie supérieure par une partie correspondante 22G, 22D de la paroi supérieure horizontale 22

A titre d'exemple non limitatif, la zone latérale gauche ZLG comporte ici en partie basse deux tiroirs superposés, inférieur 84 et supérieur 8,5 coulissants transversalement et en partie haute une étagère 86.

A titre d'exemple non limitatif, la zone latérale droite ZLD est divisée en deux zones inférieure 88 et supérieure 90 de rangement séparées par une étagère 92.

Comme on peut le voir notamment à la figure 9, le bloc fonctionnel mobile 20 est reçu, avec capacité de s'y déplacer verticalement, dans la partie principale de l'espace intérieur arrière 17 qui est délimitée par les parois verticales13, 14 et par les cloisons 82D, 82C, 82G et 115. Cette partie de forme générale parallélépipédique rectangle s'étend sensiblement sur toute la hauteur disponible qui est délimitée verticalement vers le haut par le plafond ou pavillon 16, et vers le bas par un plancher intermédiaire 112.

Le plancher intermédiaire 112 repose sur le plancher arrière horizontal 12 du véhicule 10 par l'intermédiaire d'une série de cales 212 (Voir figure 8).

Il constitue une estrade, fermée à l'avant par une plinthe 131, 'sur laquelle, en position extrême basse, le bloc fonctionnel mobile 20 (Voir figure 8) repose verticalement par une série de pieds 121 qui sont fixés sous la face inférieure de la paroi inférieure horizontale 21 constituant le plancher du bloc fonctionnel mobile 20.

Dans cette position, en-dessous du plancher 21, la hauteur de la soute à bagages 18 - séparant la face supérieure du plancher intermédiaire 112 de la face inférieure du plancher 21 du bloc fonctionnel mobile 20 - est réduite à sa valeur minimale et son volume réduit de chargement n'est utilisable que pour stocker des objets « longs » tels que par exemple des skis ou un parasol, qui peuvent y être introduits latéralement. L'accès à cette soute de hauteur réduite se fait par le portillon extérieur agencé dans la paroi latérale droite 14 en vis-à-vis de la soute à bagages 18.

Les dimensions transversale de la zone centrale ZP et des deux zones latérales gauche ZLG et droite ZLD du bloc fonctionnel mobile sont telles que la zone centrale ZP est agencée transversalement en regard de l'ouverture centrale « O » (Voir figure 9) entre les deux parties latérales 82D et 82G de la cloison intérieure de séparation qui est une ouverture d'accès à l'intérieur de l'espace intérieur arrière 17.

La zone latérale de gauche ZLG du bloc fonctionnel mobile 20 est agencée transversalement derrière la partie latérale 82G, tandis que la zone latérale de droite ZLD est agencée transversalement derrière la partie latérale de droite de la cloison intérieure de séparation.

L'espace intérieur arrière 17 comprend par exemple des moyens de guidage 75G, 75D, 76 conçus pour guider en translation verticale le bloc fonctionnel mobile 20 entre ses positions extrêmes haute et basse.

Les moyens de guidage 75G, 75D, 76 permettent aussi de positionner et de maintenir le bloc fonctionnel mobile suivant les directions longitudinale X et transversale Y, voire autour de la direction verticale Z.

Les moyens de guidage 75G-75D, 76 comprennent au moins un ensemble de guidage comportant ici deux rails de guidage 75G, 75D parallèles et espacés transversalement qui sont ici montés sur la face intérieure de la paroi arrière 13 du véhicule de loisirs 10, ainsi que deux paires de patins de guidage 76 espacées transversalement, dont chacune est fixée sur la face extérieure de la paroi de fond 26 du bloc fonctionnel 20.

Chaque paire de patins 76, espacés verticalement l'un de l'autre, est conçue pour coopérer avec un rail de guidage associé 75G, 75D, notamment pour glisser ou encore rouler le long du rail de guidage 75G, 75D.

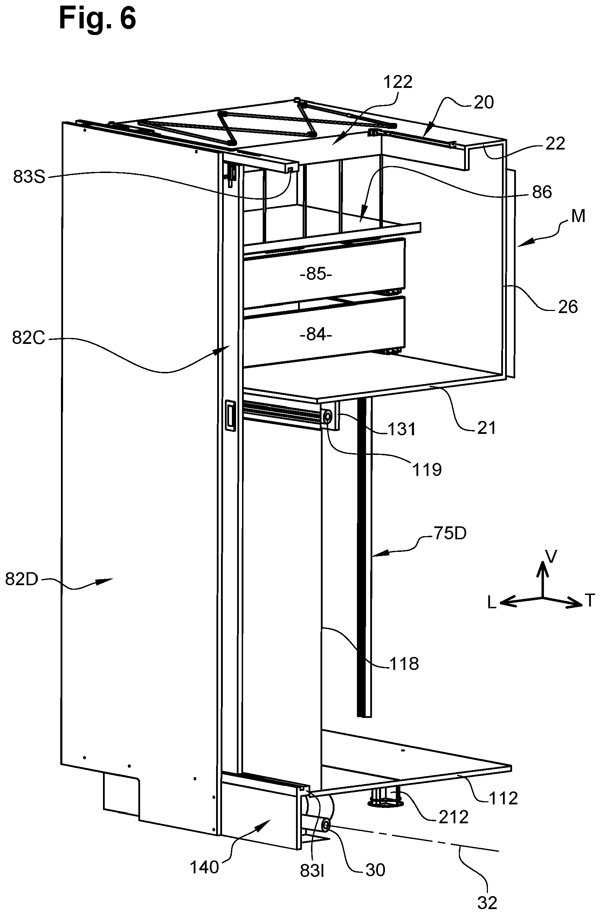

L'espace intérieur arrière 17 comprend en outre des moyens d'entraînement 30, 31G, 31D, 66 conçus pour entraîner le bloc fonctionnel mobile 20 en translation verticale par rapport à la paroi arrière 13 entre une position extrême haute (Figures 3 et 6) et une position extrême basse (Figures 4, 7 et 8), de sorte à faire varier le volume disponible à l'intérieur de la soute à bagages 18 ou encore la capacité de la soute à bagages 18. Le bloc fonctionnel mobile 20 est ainsi réglable en hauteur, notamment dans toute position extrême basse, extrême haute, ou intermédiaire entre ces deux positions extrêmes.

Les moyens d'entraînement 30, 31G, 31D, 66 peuvent en outre être conçus pour bloquer le bloc fonctionnel mobile 20 en translation verticale dans toutes les positions intermédiaires situées entre les positions extrêmes haute et basse.

De cette manière, les positions pouvant être occupées par le bloc fonctionnel mobile 20 ne sont pas limitées aux positions extrêmes haute et basse. Les utilisateurs peuvent ainsi trouver le meilleur compromis entre le volume disponible nécessaire pour stocker leurs bagages dans la soute à bagages 18 et le volume libre suffisant pour assurer leur confort en utilisant la zone d'habitacle 19.

Les moyens d'entraînement 30, 31G, 31D, 66 comprennent ici un arbre d'entraînement 30 monté sous l'estrade 112, en-dessous de la soute à bagages 18, qui est conçu pour tourner autour d'un axe de rotation horizontal, dans un premier et dans un deuxième sens opposés de rotation. L'arbre d'entraînement 30 et son axe de rotation 32 sont orientés transversalement.

Le fait de positionner l'arbre d'entraînement 30 dans la soute à bagages 18 présente l'avantage de ne pas gêner l'aménagement au-dessus de l'estrade 112 qui, en position extrême haute du bloc fonctionnel, présente une face supérieure plane entièrement dégagée.(Voir figures 4, 6 et 7).

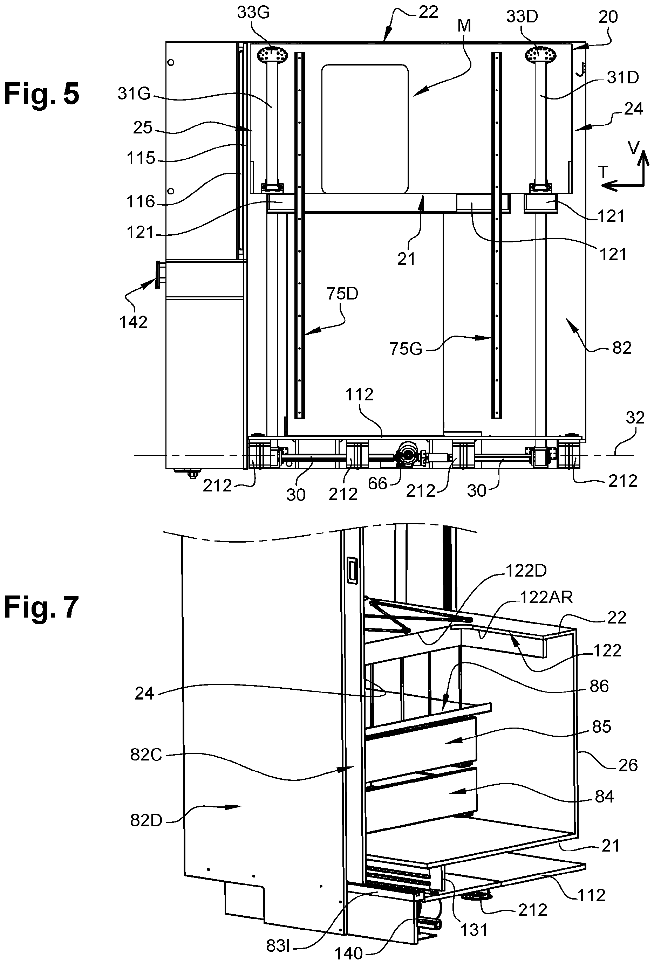

L'arbre d'entraînement 30 est ici adjacent à la plinthe verticale et transversale avant 140 qui ferme l'espace située entre le plancher 12 et le plancher intermédiaire 112 formant estrade. Les moyens d'entraînement 30, 31G, 31D, 66 peuvent aussi comprendre ici une paire de sangles 31G, 31D (Figures 5 et 8). On entend par « sangle », une bande large et plate.

En variante, les sangles 31G, 31D peuvent être remplacées par des câbles ou des chaînes. Les sangles 31G, 31D sont fixées par une première extrémité à l'arbre d'entraînement 30, et par une deuxième extrémité à la paroi latérale arrière 13 du véhicule de loisirs 10 par des zones de fixation 33G, 33D situées au niveau du plafond ou pavillon 16.

De cette manière, le bloc fonctionnel mobile 20 est ainsi suspendu à la fois lorsqu'il est dans les positions extrêmes haute et basse et lorsqu'il se déplace en translation verticale par rapport à la paroi transversale arrière 13 entre ses positions haute et basse.

Le bloc fonctionnel mobile 20 est en outre en appui sur les sangles 31G, 31D.

lorsque l'arbre d'entraînement 30 tourne autour de l'axe de rotation 32 dans le premier sens de rotation, les sangles 31G, 31D s'enroulent autour de l'arbre d'entraînement 30, de sorte à entraîner le bloc fonctionnel mobile 20 en translation verticale vers sa position extrême haute. Au contraire, lorsque l'arbre d'entraînement 30 tourne autour de l'axe de rotation 32 dans le deuxième sens de rotation, les sangles 31G, 31D se déroulent de l'arbre d'entraînement 30, de sorte à entraîner le bloc fonctionnel mobile 20 en translation verticale vers la position extrême basse.

Ainsi, l'enroulement et le déroulement des sangles 31G, 31D autour de l'arbre d'entraînement 30 permettent de déplacer le bloc fonctionnel mobile 20 en translation verticale par rapport à la paroi transversale arrière 13 vers la position extrême haute et vers la position extrême basse.

Les moyens d'entraînement 30, 31G, 31D, 66 comprennent ici un moteur 66 électrique couplé avec l'arbre d'entraînement 30. Le moteur électrique entraîne l'arbre d'entraînement 30 dans les premier et deuxième sens de rotation.

Le moteur électrique est par exemple intégré à un circuit électrique comprenant notamment un générateur électrique et un interrupteur (Non représenté) actionnable par l'utilisateur et par l'intermédiaire duquel le générateur électrique est relié au moteur électrique. L'interrupteur comprend par exemple trois positions, une première position autorisant le passage du courant électrique vers le moteur électrique afin de faire tourner l'arbre d'entraînement 30 dans le premier sens de rotation, une deuxième position interdisant le passage du courant vers le moteur électrique et une troisième position autorisant le passage du courant électrique vers le moteur électrique afin de faire tourner l'arbre d'entraînement 30 dans le deuxième sens de rotation.

L'interrupteur permet ainsi de contrôler la montée et la descente du bloc fonctionnel mobile 20 vers ses positions extrêmes haute et basse.

L'interrupteur peut être installé dans l'espace intérieur du véhicule de loisirs 10, et de préférence dans l'espace intérieur de vie 77 du véhicule de loisirs 10 situé devant l'espace intérieur arrière 17, au niveau du bloc-cuisine pour des raisons de sécurité.

Un capteur non représenté empêche de commander tout déplacement vertical de ce bloc lorsque le portillon extérieur d'accès à la soute à bagages est ouvert.

A titre de variante, il est aussi possible d'agencer l'interrupteur dans un espace sécurisé des de la soute à bagages 18 ou de la zone d'habitacle 19 de l'espace intérieur arrière 17.

Lorsque le bloc fonctionnel mobile 20 quitte sa position extrême basse, et jusqu'à sa position extrême haute, la soute à bagages 18 est ouverte longitudinalement vers l'avant et est accessible à travers l'ouverture centrale « O ».

Si la porte coulissante 82C est ouverte, et notamment afin de masquer la soute à bagages 18, on peut prévoir un store à enroulement 118 (Voir figures 3 et 6) dont l'enrouleur automatique 119 est ici fixé sous le bord transversal avant de la paroi inférieure horizontale 21 constituant le plancher du bloc fonctionnel mobile 20.

Le bord transversal inférieur du store 18 est fixé au niveau du plancher intermédiaire112. Ainsi, au fur et à mesure des déplacements verticaux du bloc fonctionnel mobile 20, le store 118 se déroule ou s'enroule en restant tendu dans un plan vertical et transversal.

La conception selon l'invention permet de disposer dans la zone centrale d'un aménagement de type dressing.

On appelle « dressing », ou « dressing-room », une petite pièce ou une zone particulière d'un espace habitable qui est aménagée pour y ranger des vêtements et s'y habiller.

C'est notamment le cas lorsque le bloc fonctionnel mobile 20 est dans sa position extrême basse dans laquelle un utilisateur peut pénétrer et se tenir debout à l'intérieur de la zone centrale en ouvrant la porte coulissante 82C et en passant par l'ouverture centrale « O ».

Les découpes 122 et 123 permettent à l'utilisateur d'entrer dans la zone centrale de dressing.

Dans cet état d'utilisation, l'utilisateur peut utiliser un miroir « M » qui est par exemple fixé en partie haute sur la face intérieure de la cloison transversale arrière (Voir figures 4 à 6). Pour l'aménagement du dressing, outre les espaces latéraux gauche et droit de rangement du bloc fonctionnel 20, on peut prévoir une barre ou tringle supérieure fixe de penderie 130 (Voir figure 4) qui sont accessibles et/ou utilisables en position extrême basse du bloc fonctionnel mobile 20.

Lorsque le bloc fonctionnel est dans une position verticale (Non représentée) qui est intermédiaire entre ses positions extrêmes basse et haute, la hauteur disponible à un utilisateur pour pénétrer à l'intérieur de la zone centrale est réduite et il ne peut pas s'y tenir debout. L'utilisateur peut néanmoins monter sur le bloc fonctionnel mobile 20 pour accéder plus facilement aux différentes zones de rangement.

Selon différents aménagements et variantes non représentés aux figures, il est possible d'aménager un siège sur le plancher 21 du bloc fonctionnel par exemple sous la forme d'un tabouret, ou bien d'aménager un siège dépliable fixé par exemple sur la face intérieure de la paroi de fond 26.

En association avec le siège, il est aussi possible d'aménager une zone latérale en une coiffeuse. On appelle « coiffeuse » une petite table pour les soins de beauté, munie d'un miroir ainsi que de tiroirs ou casiers.

On peut encore aménager une zone latérale avec une vasque..

## Revendications

1. Véhicule de loisirs (10) s'étendant d'arrière en avant suivant une direction longitudinale (L) et de bas en haut suivant une direction verticale (V), comprenant :
- une paroi transversale arrière (13) verticale,
- et un espace intérieur arrière (17) :
-- qui est délimité longitudinalement vers l'arrière par la paroi transversale arrière (13), vers l'avant par une cloison intérieure (82D, 82C, 82G) parallèle à la paroi transversale arrière (13) et vers le bas par une paroi horizontale inférieure (112) ;
-- et qui comprend une soute à bagages inférieure (18) et une zone d'habitacle supérieure(19) agencée au-dessus de la soute à bagages (18) qui sont séparées verticalement l'une de l'autre par un bloc fonctionnel mobile (20) dont une zone (ZP) est accessible depuis l'intérieur du véhicule, à travers une ouverture (O) de la cloison intérieure (82D, 82C, 82G), et qui est entraîné en translation verticale, par des moyens d'entraînement (30, 31G, 31D, 66) entre :
* une position extrême haute dans laquelle la hauteur disponible de la soute à bagages (18) est maximale ;
* et une position extrême basse laquelle dans laquelle un plancher (21) du bloc fonctionnel mobile (20) est adjacent à la paroi horizontale inférieure (112) de l'espace intérieur arrière (17), grâce à quoi un utilisateur peut accéder à l'intérieur du bloc fonctionnel mobile (20) pour pénétrer à l'intérieur de la zone d'habitacle supérieure (19),
**caractérisé en ce que** le bloc fonctionnel mobile (20) comporte une paroi inférieure horizontale (21) constituant le plancher du bloc fonctionnel mobile (20), et une paroi supérieure horizontale (22) qui, dans ladite zone principale (ZP), comporte une découpe (122) permettant à un utilisateur de stationner debout à l'intérieur de la zone d'habitacle supérieure (19) sur le plancher (21) du bloc fonctionnel mobile (20).

2. Véhicule de loisirs (10) selon la revendication 1, **caractérisé en ce que** le bloc fonctionnel mobile (20) comporte une zone principale (ZP) qui est agencée transversalement en vis-à-vis de ladite ouverture (O) de la cloison intérieure (82D, 82C, 82G) et dans laquelle, en position extrême basse, un utilisateur peut stationner à l'intérieur de la zone d'habitacle supérieure (19), sur le plancher (21) du bloc fonctionnel mobile (20).

3. Véhicule de loisirs (10) selon la revendication 2, **caractérisé en ce que** le bloc fonctionnel mobile (20) comporte au moins une zone latérale de rangement (ZLD, ZLG) qui est adjacente à ladite zone principale (ZP) et qui est accessible depuis la zone principale (ZP).

4. Véhicule de loisirs (10) selon l'une des revendications 2 ou 3, **caractérisé en ce que** le bloc fonctionnel mobile (20) comporte une paroi verticale transversale avant (23) qui, dans ladite zone principale (ZP), comporte une découpe (123) permettant à un utilisateur de pénétrer à l'intérieur de la zone d'habitacle supérieure (19).

5. Véhicule de loisirs (10) selon l'une quelconque des revendications 1 à 4, **caractérisé en ce que** lesdits moyens d'entraînement sont conçus pour entraîner le bloc fonctionnel mobile (20) en translation verticale de manière réglable en hauteur entre ladite position extrême haute et ladite position extrême basse, notamment dans toute position intermédiaire entre ces deux positions extrêmes.

6. Véhicule de loisirs (10) selon l'une quelconque des revendications précédentes, **caractérisé en ce que** le bloc fonctionnel mobile (20) comporte deux parois latérales verticales opposées (24, 25) et une paroi verticale transversale arrière de fond (26).

7. Véhicule de loisirs (10) selon l'une quelconque des revendications précédentes, **caractérisé en ce qu'**il comporte une porte (82C) d'accès à ladite ouverture (O) de la cloison intérieure (82D, 82C, 82G), notamment une porte verticale coulissante transversalement et adjacente à ladite cloison intérieure.

8. Véhicule de loisirs (10) selon l'une quelconque des revendications précédentes, **caractérisé en ce qu'**il comporte un store vertical déroulant (118) qui est lié en translation verticale avec le bloc fonctionnel mobile (20) et qui obture une portion inférieure de ladite ouverture (O) de la cloison intérieure lorsque le bloc fonctionnel mobile (20) est dans une position décalée vers le haut par rapport à sa position extrême basse.

9. Véhicule de loisirs (10) selon l'une quelconque des revendications précédentes, **caractérisé en ce que** l'espace intérieur arrière (17) est équipé d'un miroir (M) agencé sur la face intérieure de ladite paroi transversale arrière (13) verticale en regard de ladite ouverture (O) et/ou d'une barre transversale de penderie (130) agencée au-dessus de ladite zone accessible du bloc fonctionnel mobile (20).

10. Véhicule de loisirs (10) selon la revendication 1, **caractérisé en ce que** l'espace intérieur arrière (17) comprend des moyens de guidage (75G, 75D, 76) en translation verticale du bloc fonctionnel mobile (20) entre ses positions extrêmes haute et basse.

11. Véhicule de loisirs (10) selon la revendication 1, **caractérisé en ce qu'**il comporte en outre un espace intérieur de vie (77) séparé de l'espace intérieur arrière (17) par ladite cloison intérieure (82D, 82C, 82G).

## Patentansprüche

1. Freizeitfahrzeug (10), das sich von hinten nach vorne entlang einer Längsrichtung (L) und von unten nach oben entlang einer vertikalen Richtung (V) erstreckt, umfassend:
- eine vertikale hintere Querwand (13),
- und einen hinteren Innenraum (17):
-- der in Längsrichtung nach hinten durch die hintere Querwand (13), nach vorne durch eine innere Trennwand (82D, 82C, 82G) parallel zur hinteren Querwand (13) und nach unten durch eine untere horizontale Wand (112) begrenzt ist;
-- und das einen unteren Gepäckraum (18) und einen oberen Fahrgastraumbereich (19) umfasst, der über dem Gepäckraum (18) angeordnet ist, die vertikal voneinander durch einen beweglichen Funktionsblock (20) getrennt sind, von dem eine Zone (ZP) vom Fahrzeuginneren aus durch eine Öffnung (O) der inneren Trennwand (82D, 82C, 82G) zugänglich ist, und der durch Antriebsmittel (30, 31 G, 31D, 66) in vertikaler Translation angetrieben wird zwischen:
* einer oberen Endposition, wobei die verfügbare Höhe des Gepäckraums (18) maximal ist;
* und einer unteren Endposition, wobei ein Boden (21) des beweglichen Funktionsblocks (20) an die untere horizontale Wand (112) des hinteren Innenraums (17) angrenzend ist, wodurch ein Benutzer auf das Innere des beweglichen Funktionsblocks (20) zugreifen kann, um in das Innere des oberen Fahrgastraumbereichs (19) zu gelangen,
**dadurch gekennzeichnet, dass** der bewegliche Funktionsblock (20) eine horizontale untere Wand (21), die den Boden des beweglichen Funktionsblocks (20) bildet, und eine horizontale obere Wand (22) aufweist, die in der Hauptzone (ZP) einen Ausschnitt (122) aufweist, der es einem Benutzer ermöglicht, innerhalb des oberen Fahrgastraumbereichs (19) auf dem Boden (21) des beweglichen Funktionsblocks (20) aufrecht zu stehen.

2. Freizeitfahrzeug (10) nach Anspruch 1, **dadurch gekennzeichnet, dass** der bewegliche Funktionsblock (20) eine Hauptzone (ZP) aufweist, die quer gegenüber der Öffnung (O) der inneren Trennwand (82D, 82C, 82G) angeordnet ist und wobei in der unteren Endposition ein Benutzer innerhalb des oberen Fahrgastraumbereichs (19) auf dem Boden (21) des beweglichen Funktionsblocks (20) stehen kann.

3. Freizeitfahrzeug (10) nach Anspruch 2, **dadurch gekennzeichnet, dass** der mobile Funktionsblock (20) mindestens eine Nebenlagerzone (ZLD, ZLG) umfasst, die an die Hauptzone (ZP) angrenzt und von der Hauptzone (ZP) aus zugänglich ist.

4. Freizeitfahrzeug (10) nach einem der Ansprüche 2 oder 3,
**dadurch gekennzeichnet** der bewegliche Funktionsblock (20) eine vordere vertikale Querwand (23) aufweist, die in der Hauptzone (ZP) einen Ausschnitt (123) aufweist, der es einem Benutzer ermöglicht, in das Innere des oberen Fahrgastraumbereichs (19) zu gelangen.

5. Freizeitfahrzeug (10) nach einem der Ansprüche 1 bis 4,
**dadurch gekennzeichnet, dass** die Antriebsmittel zum Antreiben des beweglichen Funktionsblocks (20) in vertikaler Translation und in der Höhe zwischen der oberen Endposition und der unteren Endposition verstellbar konzipiert sind, insbesondere in den dazwischenliegenden Positionen zwischen den beiden Endpositionen.

6. Freizeitfahrzeug (10) nach einem der vorstehenden Ansprüche,
**dadurch gekennzeichnet, dass** der bewegliche Funktionsblock (20) zwei gegenüberliegende vertikale Seitenwände (24, 25) und eine hintere vertikale Querbodenwand (26) aufweist.

7. Freizeitfahrzeug (10) nach einem der vorstehenden Ansprüche,
**dadurch gekennzeichnet, dass** es eine Tür (82C) für den Zugang zu der Öffnung (O) der inneren Trennwand (82D, 82C, 82G) aufweist, insbesondere eine vertikale Schiebetür, die quer und angrenzend an die innere Trennwand verschiebbar ist.

8. Freizeitfahrzeug (10) nach einem der vorstehenden Ansprüche,
**dadurch gekennzeichnet, dass** es ein vertikales Rollo (118) aufweist, das in vertikaler Translation mit dem beweglichen Funktionsblock (20) verbunden ist und das einen unteren Abschnitt der Öffnung (O) der inneren Trennwand verschließt, wenn sich der bewegliche Funktionsblock (20) in einer nach oben versetzten Position relativ zu seiner unteren Endposition befindet.

9. Freizeitfahrzeug (10) nach einem der vorstehenden Ansprüche,
**dadurch gekennzeichnet, dass** der hintere Innenraum (17) mit einem Spiegel (M), der an der Innenseite der hinteren Querwand (13) vertikal gegenüber der Öffnung (O) angeordnet ist, und/oder mit einer Garderobenquerstange (130), die über der zugänglichen Zone des beweglichen Funktionsblocks (20) angeordnet ist, ausgestattet ist.

10. Freizeitfahrzeug (10) nach Anspruch 1, **dadurch gekennzeichnet, dass** der hintere Innenraum (17) Führungsmittel (75G, 75D, 76) in vertikaler Translation des beweglichen Funktionsblocks (20) zwischen seiner oberen und unteren Endposition umfasst.

11. Freizeitfahrzeug (10) nach Anspruch 1, **dadurch gekennzeichnet, dass** es ferner einen Wohninnenraum (77) aufweist, der durch die innere Trennwand (82D, 82C, 82G) vom hinteren Innenraum (17) getrennt ist.

## Claims

1. Recreational vehicle (10) extending from rear to front in a longitudinal direction (L) and from bottom to top in a vertical direction (V), comprising:
- a vertical rear transverse wall (13),
- and a rear interior space (17):
-- which is delimited longitudinally to the rear by the rear transverse wall (13), to the front by an inner partition (82D, 82C, 82G) which is parallel to the rear transverse wall (13) and to the bottom by a lower horizontal wall (112);
-- and which comprises a lower luggage compartment (18) and an upper passenger compartment area (19) which is arranged above the luggage compartment (18), which are vertically separated from one another by a movable functional unit (20), an area (ZP) of which is accessible from inside the vehicle through an opening (O) of the inner partition (82D, 82C, 82G), and which is vertically translated by drive means (30, 31G, 31D, 66) between:
* a highest position in which the available height of the luggage compartment (18) is at its maximum;
* and a lowest position which in which a floor (21) of the movable functional unit (20) is adjacent to the lower horizontal wall (112) of the rear interior space (17), whereby a user can access the inside of the movable functional unit (20) in order to enter the upper passenger compartment area (19),
**characterized in that** the movable functional unit (20) comprises a horizontal lower wall (21) constituting the floor of the movable functional unit (20), and a horizontal upper wall (22) which, in said main area (ZP), comprises a cutout (122) making it possible for a user to stand upright inside the upper passenger compartment area (19), on the floor (21) of the movable functional unit (20).

2. Recreational vehicle (10) according to claim 1, **characterized in that** the movable functional unit (20) comprises a main area (ZP) which is arranged transversely facing said opening (O) of the inner partition (82D, 82C, 82G) and in which, in the lowest position, a user can stand inside the upper passenger compartment area (19), on the floor (21) of the movable functional unit (20).

3. Recreational vehicle (10) according to claim 2, **characterized in that** the movable functional unit (20) comprises at least one lateral storage area (ZLD, ZLG) which is adjacent to said main area (ZP) and which is accessible from the main area (ZP).

4. Recreational vehicle (10) according to one of claims 2 or 3,
**characterized in that** the movable functional unit (20) comprises a front transverse vertical wall (23) which, in said main area (ZP), comprises a cutout (123) enabling a user to enter the upper passenger compartment area (19).

5. Recreational vehicle (10) according to any one of claims 1 to 4, **characterized in that** said drive means are designed to vertically translate the movable functional unit (20) in a height-adjustable manner between said highest position and said lowest position, in particular in any intermediate position between these two extreme positions.

6. Recreational vehicle (10) according to any one of the preceding claims, **characterized in that** the movable functional unit (20) comprises two opposite vertical side walls (24, 25) and a rear transverse vertical back wall (26).

7. Recreational vehicle (10) according to any one of the preceding claims, **characterized in that it** comprises a door (82C) for access to said opening (O) of the inner partition (82D, 82C, 82G), in particular a transversely slidable vertical door which is adjacent to said inner partition.

8. Recreational vehicle (10) according to any one of the preceding claims, **characterized in that** it comprises a vertical roller blind (118) which is vertically translatably coupled to the movable functional unit (20) and which closes off a lower portion of said opening (O) of the inner partition when the movable functional unit (20) is in a position which is higher than the lowest position thereof.

9. Recreational vehicle (10) according to any one of the preceding claims, **characterized in that** the rear interior space (17) is equipped with a mirror (M) which is arranged on the inner face of said vertical rear transverse wall (13) facing said opening (O) and/or a closet crossbar (130) which is arranged above said accessible area of the movable functional unit (20).

10. Recreational vehicle (10) according to claim 1, **characterized in that** the rear interior space (17) comprises means (75G, 75D, 76) for guiding the movable functional unit (20) in vertical translation between its highest and lowest positions.

11. Recreational vehicle (10) according to claim 1, **characterized in that** it further comprises an interior living space (77) separated from the rear interior space (17) by said inner partition (82D, 82C, 82G).
